# EUROPEAN PATENT SPECIFICATION

(11) **EP 1 809 581 B1**
(45) Date of publication and mention of the grant of the patent: **04.09.2019**
(21) Application number: 06765063.0
(22) Date of filing: 21.07.2006
(51) Int. Cl.: C03C 4/00, C08K 3/40

(54) **PARTICULATE MATERIAL**
PARTIKELFÖRMIGES MATERIAL
MATERIAU PARTICULAIRE

(30) Priority: 22.07.2005 GB 0515088; 05.05.2006 GB 0608938
(43) Date of publication of application: 25.07.2007
(73) Proprietor: IMERTECH SAS, 75015 Paris (FR)
(72) Inventor: HART, Jarrod, R., Truro, Cornwall TR1 3EN (GB); PAYNTER, Petra, Cornwall TR1 1BH (GB); SKUSE, David, Robert, Truro, Cornwall TR1 1BH (GB); PALM, Scott, K., Alpharetta, GA 30004 (US)
(74) Representative: Rushton, David John
(86) International application number: PCT/GB2006/002734
(87) International publication number: WO 2007/010276

(56) References cited:
- WO-A-2004/065469
- DE-A1- 10 248 799
- US-A- 6 017 991

## Description

The present invention relates to a film which is made from a polymer composition comprising particulate glass cullet and uses of particulate glass cullet, for example as an antiblocking agent in polymers, and compositions including the particulate glass cullet.

### Background of the Invention

It is known to incorporate particulate inorganic materials, such as ground inorganic minerals into polymer compositions for a variety of purposes. One use of such particulate materials is as an antiblocking agent in polymer compositions such as polymer films. For example, natural silica and talc are commonly added as antiblocking agents to polymer compositions which are to be formed into polymer film. "Blocking" is the term which is used to describe the unwanted adhesion between two polymer surfaces, usually films. "Anti-blocking agents" are typically added to polymer compositions to reduce or eliminate this effect in the end product.

In addition, the filler may impart various desirable optical properties to the composition, such as colour and brightness. Particulate materials may also be added to impart other properties to the polymer composition. Polymer compositions such as sealants, mastics, adhesives and the like, all also require the addition of particulate additives to adjust and improve their properties.

Inorganic particulate materials can also be incorporated into paints and varnishes, coatings, such as automotive clear coats and gel coats, and cosmetic and pharmaceutical preparations. These particulate materials are also useful as rheology modifiers in polymer compositions, and in dental compositions for the purpose of improving abrasion resistance.

Certain hard inorganic materials in particulate form, such as quartz, also find use as abrasive particles in abrasive compositions and articles.

One important factor in the production of compositions and articles which incorporate a particulate material is the cost of the particulate material. Whilst inexpensive antiblocking filler materials are available, it would be desirable to provide further inexpensive particulate materials having desirable properties across a variety of end uses.

US-A-6017991 discloses a mixture of a first component selected from talcs and one or more of a second component(s) selected from diatomaceous earth, natural and synthetic silica, clay, ceramic spheres, volcanic ash and glass cullet wherein the ratio of the first component to the second component(s) purports to provide an enhanced abrasiveness property, and enhanced die pressure character, and a reduced melt fracture character. The document further relates to an anitblock agent made from such a mixture that reduces or eliminates the need to provide polymer processing additives.

US-A-3856054 discloses a glass polymer composite and a method of preparing same consisting of crushed glass with a mixture of sizes to obtain minimum void volume impregnated with monomer which is polymerized in situ. Certain construction materials such as sewer pipe and exterior wall facings made from this material are described.

The present inventors have found that glass cullet may be incorporated in antiblocking fillers to obtain a particulate material which has a number of desirable optical and physical properties which enable its use in a variety of polymer compositions.

Thus the present invention provides an economical route to antiblocking fillers with properties comparable to or better than conventional antiblocking fillers, whilst making use of an inexpensive and recycled starting material.

### Summary of the Invention

According to a first aspect of the present invention, there is provided a film which is made from a polymer composition comprising particulate glass cullet having a d₉₀ of less than 20 µm, wherein the d₉₀ is measured by laser light particle size analysis using a CILAS (Compagnie Industrielle des Lasers) 1064 instrument, wherein the particles of the glass cullet are surface treated to modify one or more properties of the cullet.

The particulate cullet of the first aspect of the invention has a high intrinsic brightness and may also have a low yellowness. These properties are surprising in view of the poor brightness and tint of the starting cullet material.

The particulate glass cullet of the first aspect of the invention may be made by a process in which glass cullet is ground to a particle size distribution such that the d₉₀ is less than 20 *µ*m.

The particulate glass cullet is surface treated to modify one or more properties of the untreated cullet. For example, particulate glass cullet can be treated to render it less prone to re-aggregation of the particles after grinding.

The particulate glass cullet of the invention may be made by a process in which glass cullet is ground to a desired particle size and then surface treated with a surface treatment agent to modify one or more properties of the untreated cullet, including for example the tendency of the cullet to re-aggregate after grinding.

In accordance with a further aspect of the present invention, there are provided methods of reducing the blocking force of a polymer, comprising compounding a particulate cullet with the polymer.

The particulate glass cullet of the first aspect may be used as a filler in a polymeric composition as an antiblocking agent, thereby providing polymeric compositions which include the particulate cullet material of the first aspect of the present invention, and polymer films produced from such compositions.

The particulate cullet material of the first aspect of the present invention may also be used in paints and varnishes, coatings, such as clear coats as may be used in automotive applications; in cosmetics, pharmaceuticals and dental compositions; and as rheology modifiers.

### Brief Description of the Drawings

Figures 1a to 1d are photographs of a plastic filled with the particulate glass cullet of the present invention and other commercially available fillers.
Figures 2a to 2j are microscope images showing the dispersion of the particulate cullet of the invention and other commercially available fillers in LLDPE masterbatch.
Figure 3 is a chart showing the blocking force of 7 *µ*m and 3 *µ*m cullet samples compounded into LLDPE (Linear Low Density Polyethylene) masterbatch.
Figure 4 is a chart showing the re-blocking force of 7 *µ*m and 3 *µ*m cullet samples compounded into LLDPE (Linear Low Density Polyethylene) masterbatch.
Figure 5 is a chart showing the film-to-film coefficient of friction of 7 *µ*m and 3 *µ*m cullet samples compounded into LLDPE (Linear Low Density Polyethylene) masterbatch.
Figure 6 is a chart showing the haze of 7 *µ*m and 3 *µ*m cullet samples compounded into LLDPE (Linear Low Density Polyethylene) masterbatch.
Figure 7 is a chart showing the clarity of 7 *µ*m and 3 *µ*m cullet samples compounded into LLDPE (Linear Low Density Polyethylene) masterbatch.

### Detailed description of the invention

As stated above, the present invention, in a first broad aspect, relates to a film which is made from a polymer composition comprising particulate glass cullet having a d₉₀ of less than 20 µm, wherein the d₉₀ is measured by laser light particle size analysis using a CILAS (Compagnie Industrielle des Lasers) 1064 instrument, wherein the particles of the glass cullet are surface treated to modify one or more properties of the cullet.

The term "cullet" used herein refers to raw glass, broken glass from a cooled melt or scrap glass intended for recycling, and is generally plant generated or recycled from the market place. Included is any type of broken refuse glass, such as but not limited to container glass (e.g. recyclable glass jars or bottles), of all colors, uncolored glass, tinted or untinted plate glass (e.g. window panes), ceramic glass (e.g. coffee mugs), flint glass, fiberglass industry waste or feed glass (e.g., A-glass, E-glass, C-glass, etc.), and mixtures thereof. Derivatives of cullet are also included within the definition of this term, including remelted cullet and the like.

The cullet used in the present invention may be a silica glass cullet, for example a soda-lime glass cullet. Soda-lime cullet is the most common commercial glass and generally the least expensive to produce. Soda-lime glass is used primarily for bottles, jars and window glass and typically comprises from about 60-75 wt% silica, from about 12 to 18 wt% soda and from about 5 to 12 wt% lime. Typically, the refractive index of this material is of the order of about 1.45 to 1.55.

These glasses may comprise other metal oxides such as alkali oxides (e.g. K₂O), alkali earth oxides (e.g. MgO and BaO), transition metal oxides (e.g. Fe₂O₃, TiO₂) and alumina (Al₂O₃).

The cullet utilized in the present invention will preferably have a boron oxide content of less than about 5 wt.%. In container glass the alumina content is generally greater than about 0.5 wt.%, and the MgO content is generally less than about 2. In plate glass the alumina content is generally less than about 0.5 wt.% and the MgO content is generally greater than about 2 wt.%. The crystalline silica content of the cullet will typically be very low, such as less than about 0.5wt% for example.

The particulate glass cullet of the first aspect of the present invention have a d₉₀ (also referred to as the top cut) less than about 20 *µ*m and typically greater than about 3 *µ*m. In embodiments of the invention, the d₉₀ may, for example, be less than about 5 *µ*m, or may be less than about 10 *µ*m. In specific embodiments of the invention the d₉₀ may be about 13 *µ*m, may be about 10 *µ*m, or may be about 4 *µ*m.

The d₅₀ of the particulate cullet of the first aspect of the invention may be less than about 10 *µ*m, for example less than about 8 *µ*m, for example less than about 5 *µ*m, for example less than about 4 *µ*m, for example less than about 3 *µ*m. The amount of particles smaller than about 1 *µ*m is typically less than about 20% by weight. The amount of particles smaller than about 0.5 *µ*m, is typically less than about 5% by weight.

All particle size values pertaining to the particulate cullet are specified as equivalent spherical diameters, and are determined by laser light particle size analysis using a CILAS (Compagnie Industrielle des Lasers) 1064 instrument. In this technique, the size of particles in powders, suspensions and emulsions may be measured using the diffraction of a laser beam, based on application of either Fraunhofer or Mie theory. The term "mean particle size" or "d₅₀" used herein is the value, determined in this way, of the particle diameter at which there are 50% by weight of the particles which have a diameter less than the d₅₀ value. The term d₉₀ is the particle size value less than which there are 90% by weight of the particles. The preferred sample formulation for measurement of particle sizes using the CILAS 1064 instrument is a suspension in a liquid. The CILAS 1064 instrument normally provides particle size data to two decimal places, to be rounded up or down when determining whether the requirements of the present invention are fulfilled, or by other methods which give essentially the same result.

The particulate cullet of the first aspect of the present invention may have a surface area, as measured using the BET nitrogen adsorption method, of less than about 6 m²/g and at least about 0.1 m²/g. The particulate cullet may have a surface area ranging from at least about 1 m²/g to less than about 6 m²/g.

The particulate cullet of the first aspect of the present invention may have an oil absorption greater ranging from about 10g/100g to about 100g/100g, such as for example ranging from about 20g/100g to about 60g/100g, greater than about 30 g/100g, or greater than about 40g/100g. Oil absorption may be measured in accordance with ISO 787 Part 5.

The particulate glass cullet of the first aspect of the present invention may suitably have a Hegman Gauge value (BS 3900-C6, ISO 1524 or EN 21524) of less than about 50 µm, such as for example less than about 40 µm, less than 30 µm or even less than 20 µm.

The Hegman gauge consists of a steel block into which is machined a groove which is uniformly tapered along its length from 100 *µ*m at one end to zero at the other. A scale denotes the depth of the groove at any point along its length. A portion of the dispersion is placed in the groove at the deep end and a blade used to draw the liquid down the length of the groove. When the gauge is viewed at an angle, it is possible to note the point along the length of the groove where it becomes shallow enough for the pigment particles to protrude above the level of the liquid. The pigment particle size at this point can be read from the scale.

The Hegman Gauge value of a dispersion is thus a measure value of the size of the wetted/dispersed particles, in contrast to the Sedigraph data on the undispersed particles, and provides an indication of the quality of dispersion.

The value of the brightness of the particulate glass cullet according to the first aspect of the invention may be greater than about 80 %. In embodiments of the invention, the brightness may be greater than about 81 %, greater than about 82 %, greater than about 83 %, greater than about 84 %, greater than about 85 %, greater than about 86 %, greater than about 87 %, greater than about 88 %, greater than about 89 %, greater than about 90 %, greater than about 91 %, or greater than about 92 %.

For the purpose of the present application, "brightness" is defined as the percentage of light reflected by a body compared to that reflected by a perfectly reflecting diffuser measured at a nominal wavelength of 457 nm with a Datacolour Elrepho or similar instrument such as the Carl Zeiss photoelectric reflection photometer. Details of procedures for measuring brightness of powdered samples are set out in appendix A below. Yellowness is the difference between the percentage of light reflected by a body compared to that reflected by a perfectly reflecting diffuser measured at a nominal wavelength of 571nm and the brightness value described above. "Tint" is the b* value measured using the CIE1976 L*a*b* Color Space system. Positive b* values correspond to a red tint, while negative b* values corresponds to a green tint.

For the purpose of the present application, brightness (also generally referred to as 'colour') in oil/plastic samples is measured using a Minolta Colour Meter, model CM3610-D, set to D65 Northern Daylight as Primary Illuminant, 10° standard observer, Specular Component Excluded. Measurements are made in triplicate and averaged. The standard is a Minolta-supplied white calibration tile..

The value of the tint (b* value) of the particulate glass cullet of the first aspect of the present invention is less than about 1.0, but typically greater than about 0.10. In embodiments of the invention, the tint may be less than about 0.5, or less than about 0.4.

The particulate glass cullet of the first aspect of the invention may be blended or otherwise combined with one or more further fillers selected from the group consisting offeldspar, nepheline, kaolin, diatomite, perlite, wollastonite, silica, calcium carbonate, volcanic ash, or glass.

The particulate glass cullet of the first aspect of the invention may be blended or otherwise combined with talc.

The particulate glass cullet of the first aspect of the invention are surface treated, for example with one or more surface treatment agent, to modify one or more properties of the untreated cullet. In embodiments of the invention, the surface treatment is effected to ameliorate, or prevent, the effects of re-aggregation of the glass particles in the dry state after grinding.

Suitable surface treatment agents for use in this aspect of the invention include those which possess a hydrophobic portion, such as a silane group(s) or hydrocarbyl group(s), and a polar portion or portions such as an alcohol or amine group. Suitable silane based agents are aminosilanes, for example, trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine, and the like. Suitable agents having a hydrocarbyl group and a polar group are hydrocarbyl amines such as triethanolamine (TEA), and amino alcohol agents such as 2-amino-2-methyl-1-propanol. AMP-95® is a commercially available 2-amino-2-methyl-1-propanol formulation containing 5% water.

Surface treatment agents may be applied by adding to the cullet and mixing using conventional methods. Typically surface treatment agents are applied after grinding, but before the cullet is added to a polymer composition. For example, the surface treatment agent can be added to the particulate glass cullet in a step in which the cullet is mechanically de-aggregated. In an embodiment, surface treatments agents are applied during de-aggregation carried out in a milling machine, such as a laboratory scale mill, which may be carried out for a suitable time period, for example about 300 seconds.

The surface treatment agent is added in an amount effective to achieve the desired result. This will vary between treatment agents and may depend upon the precise composition of the glass cullet. For example, surface treatment agent may be added in an amount equal to or less than about 10 wt. % based on the weight of the glass cullet sample being surface treated, for example equal to or less than about 5 wt. %, for example equal to or less than about 2 wt. %, for example equal to or less than 1 wt. %, or for example equal to or less than about 0.5 wt %.

The particulate glass cullet of the first and second aspects of the present invention may be prepared by a process in which a coarse cullet is ground to the desired particle size distribution, i.e. in accordance with the first aspect of the invention, the coarse cullet is ground to a particle size distribution having a d₉₀ of less than 20 *µ*m. In embodiments of the invention, the coarse cullet comprises a silica glass, for example a soda-lime cullet.

Any suitable known grinding procedure may be employed. During the grinding process a coarse cullet may be dry ground to an intermediate particle size greater than the final desired particle size. This dry, coarse grinding step may, for example, be carried out by dry ball-milling with a ceramic grinding media.

Alternatively, grinding may be by high-compression roller, fluid energy mill (also known as jet mill) hammer mill, or stirred media milling. In one embodiment, the particulate glass cullet is prepared by stirred media milling. In another embodiment, the particulate glass cullet is prepared by wet classification of a ball milled material (using a hydrocyclone and centrifuge).

In another embodiment, the cullet is ground in a dry air grinding mill. Exemplary mills include those described in U.S. Patent Nos. 5,238,193 and 6,634,224. As described in these patents, the mill may comprise a grinding chamber, a conduit for introducing the calcium carbonate into the grinding chamber, and an impeller that rotates in the grinding chamber thereby agitating the cullet.

In an embodiment of the invention, the grinding process may further comprise an attrition grinding stage.

The attrition grinding may be wet attrition grinding or media attrition grinding. Attrition grinding is preferably carried out in the presence of a suitable particulate grinding medium. The particulate grinding medium may be of a natural or a synthetic material. The grinding medium may comprise balls, beads or pellets of any hard mineral, ceramic or metallic material; such materials may include, for example, alumina, zirconia, zirconium, silicate, aluminum silicate or the mullite-rich material which is produced by calcining kaolinitic clay at a temperature in the range of from 1300°C to 1800°C. For example, in some embodiments a Carbolite™ grinding media is preferred. Alternatively, particles of natural sand of a suitable particle size may be used. Generally, the type of, and particle size of, grinding medium to be selected for use in the invention may be dependent on the properties, such as, e.g. the particle size and the chemical composition of the feed of cullet to be ground.

Alternatively, attrition grinding can be performed autogenously without the presence of grinding media. In autogenous grinding, the raw material to be ground acts as the grinding media. Autogenous mills are available for both wet and dry grinding.

In the case of wet attrition grinding stage, the coarse cullet is preferably ground in an aqueous suspension in the presence of a grinding medium. In such a suspension, the coarse cullet may preferably be present in an amount of from 5% to 85% by weight of the suspension; more preferably in an amount of from 20% to 80% by weight of the suspension. Most preferably, the cullet may be present in an amount of about 30% to 75% by weight of the suspension.

The energy input in a typical wet attrition grinding process to obtain the desired particulate soda-lime glass cullet according to the present invention may typically be equal or greater than about 110 kWht⁻¹. The upper limit of energy input is generally difficult to specify, as the particle size will generally continue to reduce, albeit progressively more slowly, as the energy input is increased. Generally speaking, it should not be necessary for the energy input to exceed about 2000 kWht⁻¹, in order to produce useful fine particulate glass cullet according to the present invention. Preferably, the final energy input should not exceed about 350 kWht⁻¹. Aliquots of slurry may be withdrawn at, for example, 110, 190 and 260 kWht⁻¹ for analysis

The suspension of solid material to be ground may be of a relatively high viscosity, in which case a suitable dispersing agent may preferably be added to the suspension prior to comminution by the method of the invention. The dispersing agent may be, for example, a water soluble condensed phosphate, a water soluble salt of a polysilicic acid or a polyelectrolyte, for example a water soluble salt of a poly(acrylic acid) or of a poly(methacrylic acid) having a number average molecular weight not greater than 80,000. The amount of the dispersing agent used would generally be in the range of from 0.1 to 2.0% by weight, based on the weight of the dry particulate solid material. The suspension may suitably be ground at a temperature in the range of from 4°C to 100°C.

The grinding is continued until the desired particle diameter is achieved, after which the particulate material may be dried. Drying can be accomplished via use of spray driers, flash dryers, drum dryers, shelf or hearth dryers, freeze driers and drying mills, or some combination thereof.

As stated above, an aspect of the present invention is a polymer composition comprising the particulate glass cullet of the first or second aspects of the invention, where the cullet is added, for example, as an antiblocking filler. Examples of polymers which may be used in accordance with the invention include, but are not limited to, linear low density polyethylene (LLDPE) and medium density grades thereof, high density polyethylene (HDPE), and low density polyethylene (LDPE).

The particulate filler is added in an amount effective to modify the properties of the end polymer product, for example its blocking properties, as desired. For example, typical loading values could be in the range of 0 wt% - 1 wt%, or in the range 50 ppm - 10,000ppm, or in the range of 500ppm - 5,000ppm.

The polymer comprising the antiblock filler of the present invention may be formed into a polymer film. The polymer film may have a haze of less than about 6%, less than about 4%, or less than about 2%. The polymer film may have a clarity of at least about 94%, at least about 96%, or at least about 98%.

For the purposes of the present invention, haze, clarity and transmittance are measured with a BYK-Gardner Haze-Gard Plus spectrophotometer in accordance with ASTM D1003.

The particulate glass cullet of the first aspect of the invention is incorporated into a polymer composition, from which polymer articles such as polymer film may be made of. Typically, the particulate glass cullet is compounded with a polymer masterbatch, such as LLDPE. The compounded compositions may further comprise slip aids (for example Erucamide) and process aids (for example Polybatch® AMF-705). Typically, slip and process aids are added in an amount of about 5 wt. % based on the weight of the masterbatch. Polymer films may then be extruded using conventional extruding techniques.

### Examples

Three samples of glass cullet (recycled clear container glass) were finely ground to d₅₀ values of about 7 *µ*m, 3 *µ*m and 1.5 *µ*m respectively, and subjected to a chemical analysis and a particle size analysis. Equivalent data is also provided for a number of commercially available antiblocking agents; Celite 263LD (made from calcined diatomaceous earth and supplied by 'World Minerals'), Sylobloc 45 (an amorphous silica manufacture by 'Grace Division'), P200R (a calcined clay manufactured by 'Imerys Minerals Ltd') and Polybloc (a talc anitblock supplied by 'Speciality Minerals Inc.').

The chemical analysis of the samples was undertaken using X-ray Fluorescence Spectroscopy. The results are shown in the Table 1 below. The glass cullet has a typical composition for soda-lime glass.

**Table 1**

| Sample | Al₂O₃ wt. % | SiO₂ wt % | K₂O wt. % | Fe₂O₃ wt. % | TiO₂ wt. % | CaO wt. % | MgO wt. % | Na₂O wt. % | LOI |
|---|---|---|---|---|---|---|---|---|---|
| 7µm Cullet | 1.7 | 71.0 | 0.56 | 0.12 | 0.05 | 10.65 | 1.53 | 14.24 | 0.18 |
| 3µm Cullet | 1.6 | 70.8 | 0.54 | 0.11 | 0.04 | 10.36 | 1.52 | 14.81 | 0.18 |
| 1.5µm Cullet | 1.5 | 70.7 | 0.53 | 0.12 | 0.06 | 10.29 | 1.49 | 15.14 | 0.18 |
| Calcined DE | 0.5 | 92.2 | 0.08 | 0.25 | 0.05 | 5.25 | 0.39 | 1.08 | 0.24 |
| Amorphous Silica | 0.2 | 94.0 | <0.01 | 0.02 | 0.03 | 0.04 | 0.03 | 0.15 | 5.59 |
| Calcined Clay | 41.0 | 55.5 | 1.95 | 0.65 | 0.06 | 0.05 | 0.26 | 0.15 | 0.41 |
| Talc | 7.2 | 72.3 | 2.85 | 0.884 | 0.01 | 0.88 | 11.3 | 1.16 | 2.98 |

Particle size (measured by CILAS), surface area and Hegmann dispersability data for the ground samples are shown in Table 2. Sylobloc has an exceptionally high surface area, and it may be that an aggregate size was measured and so the fundamental particle size is much smaller than that measured by CILAS.

**Table 2**

| Sample | %< 10µm | %< 5µm | %< 2µm | %< 1µm | %< 0.5µm | d₉₀ (µm) | d₅₀ (µm) | A^{a)} m²/g | Hegman (µm) |
|---|---|---|---|---|---|---|---|---|---|
| 7µm Cullet | 26.5 | 33.8 | 12.4 | 3.6 | 0.8 | 13.1 | 6.9 | 0.4 | 58 |
| 3µm Cullet | 91.3 | 71.1 | 33.7 | 11.3 | 3.2 | 9.8 | 3.0 | 3.2 | 96 |
| 1.5µm Cullet | 99.6 | 94.6 | 62.7 | 20.8 | 3.8 | 3.7 | 1.6 | 5.7 | 130 |
| Calcined DE | 37.7 | 16.6 | 6.6 | 2.2 | 0.3 | | 12.5 | 1.6 | 45 |
| Amorphous Silica | 99.8 | 60.0 | 8.1 | 0.2 | 0.2 | | 4.5 | 398 | 10 |
| Calcined Clay | 91.6 | 71.3 | 33.8 | 12.5 | 3.7 | | 3.0 | 8.3 | 40 |
| Talc | 88.2 | 62.7 | 27.9 | 10.5 | 3.2 | | 3.8 | 6.9 | 25 |

| | | | | | | | | | |
|---|---|---|---|---|---|---|---|---|---|
| ^{a>} surface area | | | | | | | | | |

Optical properties of the ground samples are shown in Table 3. The 3 *µ*m d₅₀ and 1.5 *µ*m d₅₀ cullet samples are as least as bright (L* value) as the commercial antiblock samples. The yellowness of each of the cullet samples is better than the commercial anitblock samples. The refractive index of the cullet is very similar to that of polyethylene, indicating that the cullet may give advantageous in reducing haze generated by scattering in a polymer comprising the cullet.

**Table 3**

| Sample | Powder Brightness | | | | Refr. Index |
|---|---|---|---|---|---|
| | Brightness | L* | a* | b* | |
| 7µm Cullet | 77.6 | 90.9 | -0.07 | 0.48 | 1.515 |
| 3µm Cullet | 86.8 | 94.9 | -0.06 | 0.37 | 1.515 |
| 1.5µm Cullet | 89.4 | 95.9 | -0.09 | 0.38 | 1.515 |
| Calcined DE | 84.7 | 94.3 | -0.05 | 1.06 | 1.49 |
| Amorphous Silica | 85.2 | 95.2 | -0.46 | 2.37 | 1.47 |
| Calcined Clay | 88.9 | 96.9 | -0.10 | 2.70 | 1.52 |
| Talc | 87.6 | 95.7 | -0.14 | 1.37 | 1.55 |

The three ground cullet samples were subjected to three different surface treatments. These were applied during de-aggregation (300 s on a laboratory scale mill). The results are shown in Table 4.

**Table 4**

| Treatment | d₉₀ 0days | d₉₀ 2days |
|---|---|---|
| 1.5um Cullet - untreated - exposed to air | 3.75 | 18.1 |
| 1.5um Cullet - untreated - stored in closed container | 3.75 | 18.1 |
| 1.5um Cullet - untreated - stored in vacuum oven @50°C | 3.75 | 17.8 |
| 1.5um Cullet - 0.5wt% Amino-silane - exposed to air | 3.58 | 3.58 |
| 1.5um Cullet - 1.0wt% Amino-silane - exposed to air | 3.80 | 3.94 |
| 1.5um Cullet - 0.5wt% AMP95 - exposed to air | 3.75 | 3.75 |
| 1.5um Cullet - 1.0wt% AMP95 - exposed to air | 3.92 | 3.86 |
| 1.5um Cullet - 1.0wt% TEA - exposed to air | 3.86 | 3.85 |

The 7 *µ*m and 3 *µ*m cullet samples were compounded into LLDPE (Linear Low Density Polyethylene) masterbatch (30 *µ*m LLDPE film). Formulation details were as follows:
- Polymer: 90:10 blend of Innovex LL6208F and Exxon Mobil LD100BW
- Slip aid: Erucamide at 1:2 ratio with fillers
- Process aid: 100 ppm AMF 705
- (Slip and process aids added in 5 wt. % masterbatches in LLDPE)
- 1000, 2000 and 3000 ppm of antiblock comprising 7 *µ*m cullet (Antiblock A) and 3 *µ*m cullet (Antiblock B)

Film processing details were as follows:
- Film blown using a Collin 180/30 extruder, with a 60 mm die diameter and 0.8 mm die gap, at 30 *µ*m gauge
- Temperature profile: 240°C at the die: 240, 240 240, 240, 235, 220, 190°C in the barrel
- Screw speed: 56 rpm
- Blow Up Ratio 1:2.5
- Haul off: 10 m min⁻¹
- Layflat: 225 mm
- Samples conditioned at 20°C 50% RH for minimum of 48 hours before testing

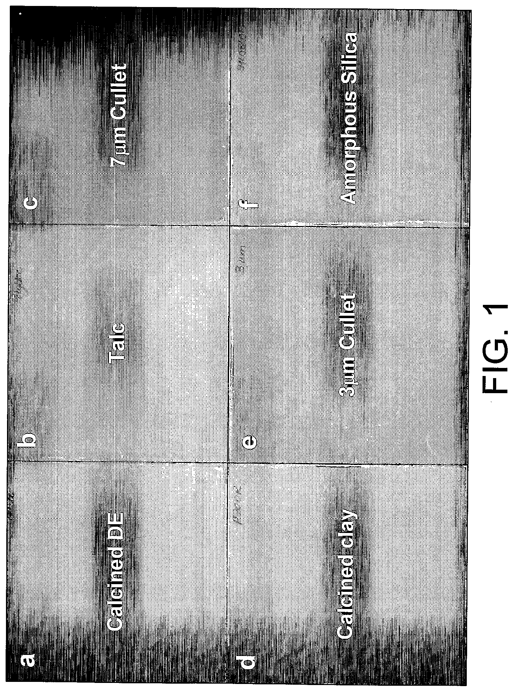

Colour data for the masterbatch (MB) plaques are given in Table 5. Photographs of the filled plastics are shown in Figures 1a to 1f.

**Table 5**

| Sample | Filler Load(wt%) | Colour of MB plaques | | |
|---|---|---|---|---|
| | | L* | a* | b* |
| 7µm Cullet | 10.0 | 71.53 | -1.22 | 6.42 |
| 3µm Cullet | 11.0 | 73.47 | -0.42 | 13.42 |
| Calcined Clay | 10.2 | 74.01 | 2.76 | 12.6 |
| Calcined DE | 9.9 | 77.05 | -0.19 | 8.53 |
| Talc | 10.5 | 73.73 | 0.28 | 8.28 |
| Amorphous Silica | 11.2 | 75.71 | 2.86 | 17.16 |

Both cullet samples have similar colour performance in LLDPE masterbatch to the commercial materials. The 7 *µ*m cullet's low yellowness is an important asset when selling anitblock masterbatch, as it reduces the "dirty" appearance of the film once reeled.

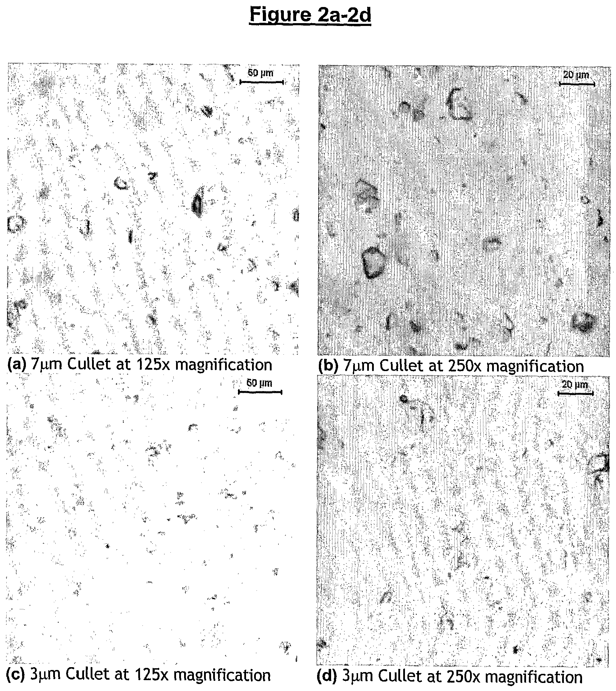

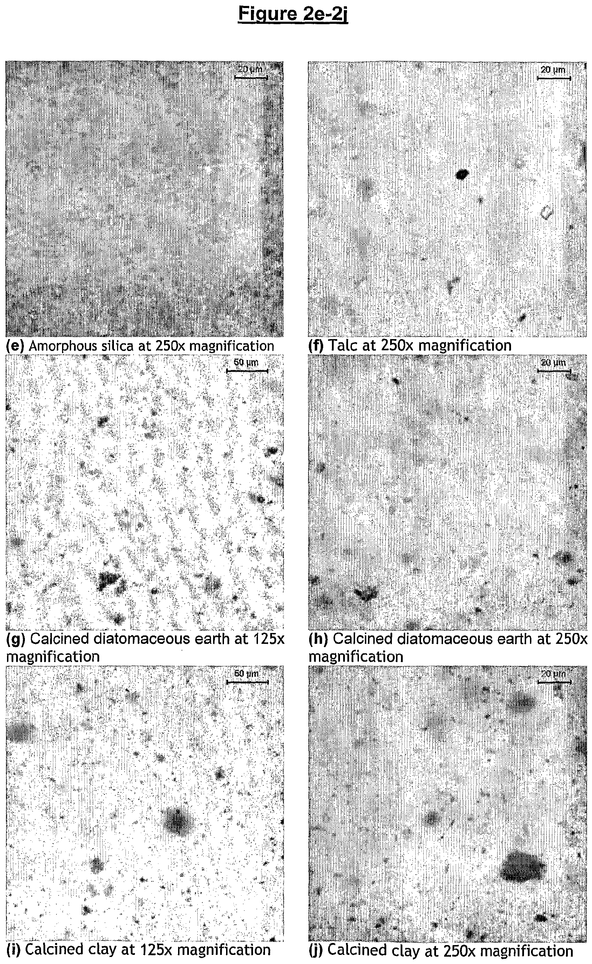

Dispersion of the cullet/masterbatch samples were analysed under transmitted light under alight microscope. In each case, a small amount of the cullet/masterbatch was pressed between two sheets of Melinex film in a heated hydraulic press to form a transparent but relatively thick film (approximately 100 *µ*m). The pictures are shown in Figure 2.

Both the 7 *µ*m and 3 *µ*m cullet samples show good dispersion in LLDPE masterbatch. Some difficulty was experienced in obtaining clear images of the cullets resulting from the close refractive index match with the polymer. This however should result in good low haze performance in blown film.

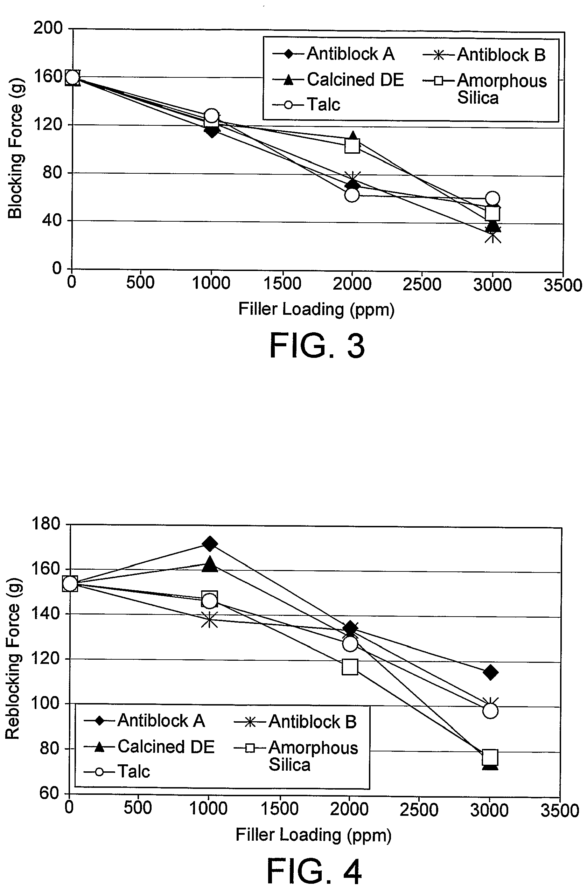

The blocking force for each of the samples are shown in Figure 3, and was determined according to ASTM D3354-89. Figure 3 illustrates that the two novel antiblock materials provide equivalent antiblocking performance to the commercial materials at the tested loading levels.

The reblocking force for each of the samples are shown in Figure 4, and was determined according to ASTM D3354-89. Figure 4 illustrates that the novel antiblock material "Antiblock B" provides equivalent reblocking performance to the commercial materials tested at all of the loading levels presented here. The novel antiblock material "Antiblock A" provides slightly poorer reblocking performance to some of the commercial materials tested, but similar performance to the Celite 263LD sample, at the tested loading levels.

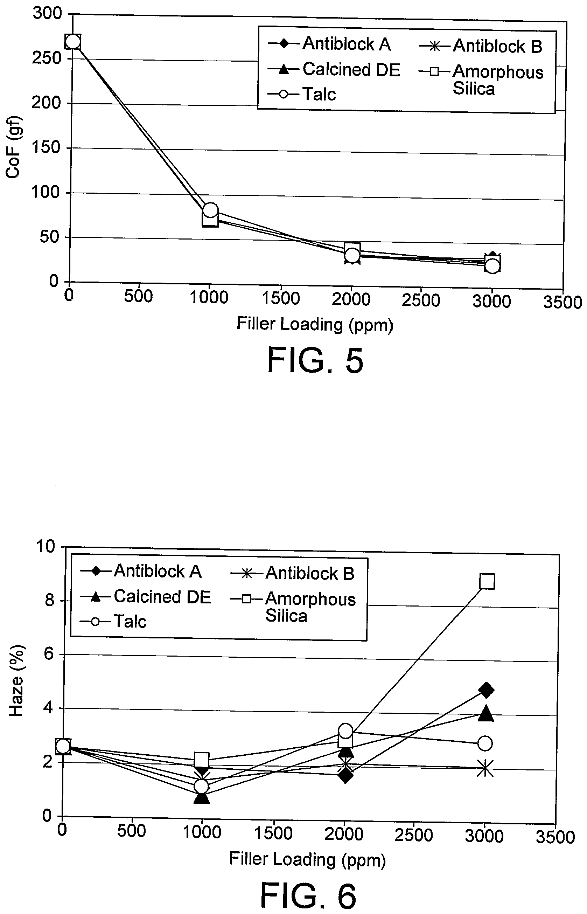

The film-to-film coefficient of friction of each of the samples are shown in Figure 5, and was determined according to ASTM D1894-90. Figure 5 illustrates that the two novel antiblock materials provide comparable Dynamic Coefficient of Friction performance to the commercial materials tested at the tested loading levels.

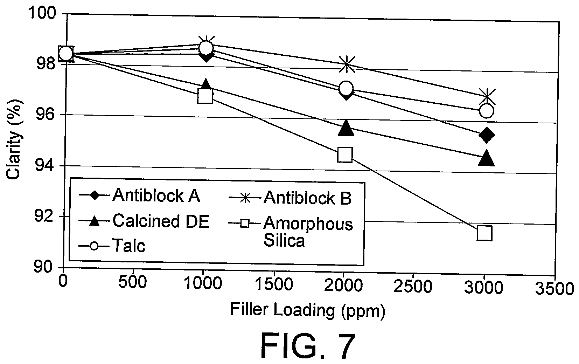

The haze and clarity of each of the samples are shown in Figure 6 and Figure 7 respectively. Figure 6 illustrates that both novel antiblock materials provide comparable haze performance to the commercial materials at load levels up to 2000ppm. The novel antiblock material "Antiblock B" provides better Haze performance than the commercial materials at load levels in excess of 2000ppm. The novel antiblock material "Antiblock A" provides similar Haze performance to the commercial materials at load levels up to 2000ppm, and that both provide better performance than the Sylobloc 45 sample at load levels in excess of 2000ppm.

Figure 7 illustrates that both novel antiblock materials provide equivalent clarity performance to Polybloc talc, and better clarity performance than the other commercial materials, at tested load levels. Both novel antiblock materials provide better performance than the Sylobloc 45 sample at load levels up to 3000ppm.

### Appendix - 'Brightness' Test Method

### Definitions

Brightness is the percentage of light reflected by a body compared to that reflected by a perfectly reflecting diffuser measured at a nominal wavelength of 457 nm with a Datacolor Elrepho or similar instrument such as the Carl Zeiss Photoelectric Reflection Photometer (Elrepho).

Yellowness is the difference between the percentage of the light reflected by a body compared to that reflected by a perfectly reflecting diffuser measured at a nominal wavelength of 571 nm and the brightness defined above.

### Scope

A test surface is produced by pulverising a dried material to disperse it completely then compressing it under fixed conditions to form a powder tablet. The reflectance values of this tablet are measured at two wavelengths in the visible spectrum. Additional reflectance values may be measured at other wavelengths when required and can be used to calculate the tristimulus values or other functions. The spectrophotometer incorporates a gloss shield and the measurements are made with the ultraviolet component excluded.

### Standards

The primary standard adopted in this method is an ISO level 2 reflectance standard supplied and calibrated by Physikalisch-Technische Bundesanstalt (P.T.B.) Germany. (ISO appointed primary calibration laboratory.).

A 'working standard' is used to calibrate the photometer for routine brightness measurements. This may be a ceramic tile which has been calibrated previously against the current level 2 standard.

### Apparatus

Elrepho Datacolor, or Carl Zeiss Photoelectric Reflection Photometer (Elrepho) fitted with two tungsten lamps, a gloss shield and a range of filters, including one at a nominal setting of 457 nm and one at a nominal setting of 571 nm.

Drying oven, forced circulation type, capable of maintaining a temperature of 80 °C to within 5 °C.

Pulveriser and sample bowls.

Tablet forming equipment, comprising of a cylinder, piston, press, measuring cup, forming rings and ring holder. The press is designed to exert a pressure of 1.2 kg cm⁻² upon the tablet surface.

Plate glass, approximately 100 mm x 80 mm x 5 mm.

Metal polish (for cleaning the plate glass).

Balance capable of weighing 20 g to within 0.1 g.

Miscellaneous: sample dishes, small brush, duster, palette knife, sealed container.

### Preparation of powder tablet

20 g of the sample is transferred to a sample dish and placed in the oven for between 15 and 30 minutes or until dry. Dryness is denoted by the absence of condensation on a piece of cool plate glass when it is placed in close proximity to the surface of the sample which has just been removed from the oven.

The dish is removed from the oven and allowed to cool. 10 g of test sample is pulverise for 30 seconds (if a pulveriser is not available a substitute mill may be used providing it has a rotational shaft speed of at least 20,000 r.p.m). In addition, a series of milling sessions are carried out to determine the conditions that provide maximum dispersion. This state is denoted when the brightness gain after successive millings does not exceed 0.1 % reflectance unit.

Transfer the sample from the Pulveriser into an empty dish. Place the tablet-forming ring, numbered side facing downwards, onto the clean glass. Place the cylinder onto the ring.

Measure out approximately 20 ml of test sample using the measuring cup. NOTE: If the bulk density of the material is such that the volume of 10 g of the pulverised test sample is less than 20 ml then use all of it. Pour the sample into the cylinder and level it. Lower the piston gently onto the sample.

Position the glass supporting the piston in such a manner, that when the lever of the press is lowered, the spigot engages the dimple in the centre of the piston. Lower the lever press gently onto the piston and allow the lever to rest there under its own weight for 20 seconds. Do not apply additional pressure. Raise the lever and remove the piston and cylinder. Remove the ring containing the powder tablet.

### Measurement of brightness and yellowness

The standard instrument for reflectance is the Datacolor (2000 or 3000). The instrument is PC driven and is programmed to follow the manufacturer's instructions to determine the functions required. These instructions are controlled locally and displayed within the vicinity of the instrument.

Operating instructions for the Zeiss Elrepho are as follows:
1. Select the filter control position 12 and zero the meter.
2. Select filter 457 nm (filter position number 8).
3. Place the working standard into the ring holder and place it on the springloaded pedestal. Unlock the pedestal and allow it to present the standard to the measuring aperture.
4. Set the graduated drum to the value assigned to the standard.
5. Balance the indicator with the neutral wedge control operated in conjunction with the sensitivity key.
6. Lower the pedestal, remove the standard from the ring holder, replace it with the test sample and allow the pedestal to present the test sample to the measuring aperture.
7. Balance the indicator by rotating the graduated drum operated in conjunction with the sensitivity key.
8. Record the reading on the graduated drum to within 0.1 reflectance unit. Remove the test sample.
9. Select filter 571 nm (filter position number 3).
10. Repeat 3 to 8. If the subsequent measurement of the working standard deviates by more than 0.1 reflectance unit from the previous measurement, re-calibrate the instrument and repeat the batch of measurements.
11. If reflectance values at other wavelengths are required, select the appropriate filter and repeat 3 to 8 using the appropriate standard value in 4.

### Expression of results

Brightness is reported as the percentage reflectance of 457 nm (violet) and is reported as read from the instrument. The yellowness is reported as the value obtained when the reflectance at 457 nm is subtracted from the reflectance at 571 nm. Reflectance values at other wavelengths are reported as the percentage reflectance corresponding to the function required.

### Precision

The standard deviation for reflectance measurements is 0.2.

### Equipment check and calibration

This is controlled locally and is ISO9001(2000) compliant.

### Equipment suppliers

Datacolor International, 6 St. George's Court, Dairyhouse Lane, Broadheath, Altrincham, Cheshire, WA14 5UA, England.

## Claims

1. A film which is made from a polymer composition comprising particulate glass cullet having a d₉₀ of less than 20 µm, wherein the d₉₀ is measured by laser light particle size analysis using a CILAS (Compagnie Industrielle des Lasers) 1064 instrument, wherein the particles of the glass cullet are surface treated to modify one or more properties of the cullet.

2. The film according to claim 1, wherein the particles of the glass cullet are surface modified with a surface treatment agent effective to reduce or eliminate re-aggregation of the particles of the glass cullet.

3. The film according to claim 2, wherein the particles of glass cullet are surface treated with an effective amount of a treatment agent which comprises a hydrophobic portion and a polar portion.

4. The film according to claim 3, wherein the treatment agent comprises a hydrophobic portion selected from one or more silane groups or one or more hydrocarbyl groups and a polar portion selected from amine and alcohol groups.

5. The film according to claim 1, wherein the cullet is a silica glass cullet.

6. The film according to claim 5, wherein the cullet is a soda-lime glass cullet.

7. The film according to claim 1, wherein the d₉₀ is less than 10 µm.

8. The film according to claim 7, wherein the d₉₀ is less than 5 µm.

9. The film according to claim 1, wherein the d₉₀ is greater than 3 µm.

10. The film according to claim 1, wherein the d₅₀ is less than 10 µm and measured by laser light particle size analysis using a CILAS (Compagnie Industrielle des Lasers) 1064 instrument.

11. The film according to claim 10, wherein the d₅₀ is less than 8 µm.

12. The film according to claim 11, wherein the d₅₀ is less than 5 µm.

13. The film according to claim 12, wherein the d₅₀ is less than 4 µm.

14. The film according to claim 13, wherein the d₅₀ is less than 3 µm.

15. The film according to claim 1, wherein the particulate glass cullet has a brightness greater than 80%, wherein the brightness is the percentage of light reflected by a body compared to that reflected by a perfectly reflecting diffuser measured at a nominal wavelength of 457 nm with a Datacolour Elrepho or similar instrument.

16. The film according to claim 1, wherein the particulate glass cullet has a brightness greater than 85%, wherein the brightness is the percentage of light reflected by a body compared to that reflected by a perfectly reflecting diffuser measured at a nominal wavelength of 457 nm with a Datacolour Elrepho or similar instrument.

17. The film according to claim 1, wherein the particulate glass cullet has a brightness greater than 89%, wherein the brightness is the percentage of light reflected by a body compared to that reflected by a perfectly reflecting diffuser measured at a nominal wavelength of 457 nm with a Datacolour Elrepho or similar instrument.

18. The film according to claim 1, wherein the particulate glass cullet has a brightness greater than 91%, wherein the brightness is the percentage of light reflected by a body compared to that reflected by a perfectly reflecting diffuser measured at a nominal wavelength of 457 nm with a Datacolour Elrepho or similar instrument.

19. The film according to claim 1, wherein the polymer composition further comprises one or more additional filler materials selected from the group consisting of talc, feldspar, nepheline, kaolin, diatomite, perlite, wollastonite, silica, calcium carbonate, volcanic ash, or glass.

20. Use of particulate glass cullet having a d₉₀ less than 20 µm in a polymer composition as an anti-blocking pigment, wherein the particles of the glass cullet are surface treated to modify one or more properties of the cullet.

21. A film according to any one of claims 1 to 19, wherein the polymer composition comprises a polymer selected from the group consisting of polyethylene, polypropylene, nylon, natural rubber, SBR rubber, silicone rubber and polyesters.

## Patentansprüche

1. Film, der aus einer Polymerzusammensetzung hergestellt ist, die partikelförmigen Glasbruch umfasst, der eine d₉₀ von weniger als 20 µm aufweist, wobei die d₉₀ durch Laserlichtpartikelgrößenanalyse unter Anwendung eines CILAS- (Compagnie Industrielle des Lasers) 1064-Instruments gemessen wird, wobei die Partikel des Glasbruchs oberflächenbehandelt werden, um eine oder mehrere Eigenschaften des Bruchs zu modifizieren.

2. Film nach Anspruch 1, wobei die Partikel des Glasbruchs mit einem Oberflächenbehandlungsmittel oberflächenmodifiziert werden, das wirksam ist, die erneute Aggregierung der Partikel des Glasbruchs zu reduzieren oder zu eliminieren.

3. Film nach Anspruch 2, wobei die Partikel von Glasbruch mit einer wirksamen Menge Behandlungsmittel behandelt werden, das einen hydrophoben Anteil und einen polaren Anteil umfasst.

4. Film nach Anspruch 3, wobei das Behandlungsmittel einen hydrophoben Anteil ausgewählt unter einer oder mehreren Silangruppen oder einer oder mehreren Hydroxcarbylgruppen und einen polaren Anteil ausgewählt unter Amin- und Alkoholgruppen umfasst.

5. Film nach Anspruch 1, wobei der Bruch ein Kieselsäureglasbruch ist.

6. Film nach Anspruch 5, wobei der Bruch ein Kalknatronglasbruch ist.

7. Film nach Anspruch 1, wobei die d₉₀ weniger als 10 µm beträgt.

8. Film nach Anspruch 7, wobei die d₉₀ weniger als 5 µm beträgt.

9. Film nach Anspruch 1, wobei die d₉₀ mehr als 3 µm beträgt.

10. Film nach Anspruch 1, wobei die d₅₀ von weniger als 10 µm beträgt und durch Laserlichtpartikelgrößenanalyse unter Anwendung eines CILAS- (Compagnie Industrielle des Lasers) 1064-Instruments gemessen wird.

11. Film nach Anspruch 10, wobei die d₅₀ weniger als 8 µm beträgt.

12. Film nach Anspruch 11, wobei die d₅₀ weniger als 5 µm beträgt.

13. Film nach Anspruch 12, wobei die d₅₀ weniger als 4 µm beträgt.

14. Film nach Anspruch 13, wobei die d₅₀ weniger als 3 µm beträgt.

15. Film nach Anspruch 1, wobei der teilchenförmige Glasbruch eine Leuchtdichte von über 80 % aufweist, wobei die Leuchtdichte der Prozentsatz von Licht ist, das von einem Körper im Vergleich mit demjenigen reflektiert wird, das von einem perfekt reflektierenden Diffusor reflektiert wird, das bei einer Nennwellenlänge von 457 nm mit einem Datacolour Elrepho oder ähnlichen Instrument gemessen wird.

16. Film nach Anspruch 1, wobei der teilchenförmige Glasbruch eine Leuchtdichte von über 85 % aufweist, wobei die Leuchtdichte der Prozentsatz von Licht ist, das von einem Körper im Vergleich mit demjenigen reflektiert wird, das von einem perfekt reflektierenden Diffusor reflektiert wird, das bei einer Nennwellenlänge von 457 nm mit einem Datacolour Elrepho oder ähnlichen Instrument gemessen, aufweist.

17. Film nach Anspruch 1, wobei der teilchenförmige Glasbruch eine Leuchtdichte von über 89 % aufweist, wobei die Leuchtdichte der Prozentsatz von Licht ist, das von einem Körper im Vergleich mit demjenigen reflektiert wird, das von einem perfekt reflektierenden Diffusor reflektiert wird, das bei einer Nennwellenlänge von 457 nm mit einem DEatacolour Elrepho oder ähnlichen Instrument gemessen, aufweist.

18. Film nach Anspruch 1, wobei der teilchenförmige Glasbruch eine Leuchtdichte von über 91 % aufweist, wobei die Leuchtdichte der Prozentsatz von Licht ist, das von einem Körper im Vergleich mit demjenigen reflektiert wird, das von einem perfekt reflektierenden Diffusor reflektiert wird, das bei einer Nennwellenlänge von 457 nm mit einem Datacolour Elrepho oder ähnlichen Instrument gemessen, aufweist.

19. Film nach Anspruch 1, wobei die Polymerzusammensetzung ferner ein oder mehrere zusätzliche Füllstoffmaterialien umfasst ausgewählt aus der Gruppe bestehend aus Talkum, Feldspat, Nephelin, Kaolin, Diatomit, Perlit, Wollastonit, Siliciumdioxid, Calciumcarbonat, Vulkanasche oder Glas.

20. Verwendung von partikelförmigem Glasbruch, der eine d₉₀ von weniger als 20 µm aufweist, in einer Polymerzusammensetzung als Antiblockpigment, wobei die Partikel des Glasbruchs oberflächenbehandelt werden, um eine oder mehrere Eigenschaften des Bruchs zu modifizieren.

21. Film nach irgendeinem der Ansprüche 1 bis 19, wobei die Polymerzusammensetzung ein Polymer umfasst ausgewählt aus der Gruppe bestehend aus Polyethylen, Polypropylen, Nylon, Naturkautschuk, SPR-Kautschuk, Siliconkautschuk und Polyestern.

## Revendications

1. Un film qui est fabriqué à partir d'une composition de polymère comprenant du calcin de verre particulaire présentant un d₉₀ inférieur à 20 µm, dans lequel le d₉₀ est mesuré par l'analyse de la taille de particule par la lumière laser à l'aide d'un instrument 1064 de la CILAS (Compagnie Industrielle des Lasers), dans lequel les particules de calcin de verre sont traitées en surface pour modifier une ou plusieurs propriétés du calcin.

2. Le film selon la revendication 1, dans lequel les particules de calcin de verre sont modifiées en surface avec un agent de traitement de surface efficace pour réduire ou éliminer la réagrégation des particules de calcin de verre.

3. Le film selon la revendication 2, dans lequel les particules de calcin de verre sont traitées en surface avec une quantité efficace d'un agent de traitement qui comprend une portion hydrophobe et une portion polaire.

4. Le film selon la revendication 3, dans lequel l'agent de traitement comprend une portion hydrophobe sélectionnée parmi un ou plusieurs groupes silane ou un ou plusieurs groupes hydrocarbyle et une portion polaire sélectionnés parmi des groupes amine et des groupes alcool.

5. Le film selon la revendication 1, dans lequel le calcin est un calcin de verre de silice.

6. Le film selon la revendication 5, dans lequel le calcin est un calcin de verre sodocalcique.

7. Le film selon la revendication 1, dans lequel le d₉₀ est inférieur à 10 µm.

8. Le film selon la revendication 7, dans lequel le d₉₀ est inférieur à 5 µm.

9. Le film selon la revendication 1, dans lequel le d₉₀ est supérieur à 3 µm.

10. Le film selon la revendication 1, dans lequel le d₅₀ est inférieur à 10 µm et mesuré par l'analyse de la taille de particule par la lumière laser à l'aide d'un instrument 1064 de la CILAS (Compagnie Industrielle des Lasers),

11. Le film selon la revendication 10, dans lequel le d₅₀ est inférieur à 8 µm.

12. Le film selon la revendication 11, dans lequel le d₅₀ est inférieur à 5 µm.

13. Le film selon la revendication 12, dans lequel le d₅₀ est inférieur à 4 µm.

14. Le film selon la revendication 13, dans lequel le d₅₀ est inférieur à 3 µm.

15. Le film selon la revendication 1, dans lequel le calcin de verre particulaire présente une luminosité supérieure à 80 %, dans lequel la luminosité est le pourcentage de lumière réfléchie par un corps comparativement à celle réfléchie par un diffuseur parfaitement réfléchissant mesurée à une longueur d'onde nominale de 457 nm avec un Datacolor Elrepho ou un instrument semblable.

16. Le film selon la revendication 1, dans lequel le calcin de verre particulaire présente une luminosité supérieure à 85 %, dans lequel la luminosité est le pourcentage de lumière réfléchie par un corps comparativement à celle réfléchie par un diffuseur parfaitement réfléchissant mesurée à une longueur d'onde nominale de 457 nm avec un Datacolor Elrepho ou un instrument semblable.

17. Le film selon la revendication 1, dans lequel le calcin de verre particulaire présente une luminosité supérieure à 89 %, dans lequel la luminosité est le pourcentage de lumière réfléchie par un corps comparativement à celle réfléchie par un diffuseur parfaitement réfléchissant mesurée à une longueur d'onde nominale de 457 nm avec un Datacolor Elrepho ou un instrument semblable.

18. Le film selon la revendication 1, dans lequel le calcin de verre particulaire présente une luminosité supérieure à 91 %, dans lequel la luminosité est le pourcentage de lumière réfléchie par un corps comparativement à celle réfléchie par un diffuseur parfaitement réfléchissant mesurée à une longueur d'onde nominale de 457 nm avec un Datacolor Elrepho ou un instrument semblable.

19. Le film selon la revendication 1, dans lequel la composition de polymères comprend en outre un ou plusieurs matériaux de remplissage supplémentaires sélectionnés parmi le groupe constitué par le talc, le feldspath, la néphéline, le kaolin, la diatomite, la perlite, la wollastonite, la silice, le carbonate de calcium, la cendre volcanique, ou le verre.

20. Utilisation de calcin de verre particulaire présentant un d₉₀ inférieur à 20 µm dans une composition à base de polymères comme pigment antiblocage, dans lequel les particules de calcin de verre sont traitées en surface pour modifier une ou plusieurs propriétés du calcin.

21. Un film selon l'une quelconque des revendications 1 à 19, dans lequel la composition de polymères comprend un polymère sélectionné parmi le groupe constitué par le polyéthylène, le polypropylène, le nylon, le caoutchouc naturel, le caoutchouc SBR, le caoutchouc de silicone et les polyesters.
